Europäisches Patentamt

European Patent Office

Office européen des brevets

(19)

(11) Publication number: **0 233 611 B1**

# EUROPEAN PATENT SPECIFICATION

(12)

(45) Date of publication of patent specification: 27.03.91

(51) Int. Cl.⁵: **G01V 9/04, H01H 19/20, H03K 17/968**

(21) Application number: **87102083.0**

(22) Date of filing: **13.02.87**

(54) A rotary type photoelectric switch.

(30) Priority: **14.02.86 JP 31500/86**
**14.02.86 JP 20809/86 U**

(43) Date of publication of application:
**26.08.87 Bulletin 87/35**

(45) Publication of the grant of the patent:
**27.03.91 Bulletin 91/13**

(84) Designated Contracting States:
**AT BE CH DE ES FR GB GR IT LI LU NL SE**

(56) References cited:
**DE-A- 2 224 169**
**US-A- 4 065 669**
**US-A- 4 105 938**

(73) Proprietor: **OMRON TATEISI ELECTRONICS CO.**
**10, Tsuchido-cho Hanazono Ukyo-ku**
**Kyoto 616(JP)**

(72) Inventor: **Omura, Yutaka Omron Tateisi Electronics Co.**
**Patent Dept. 20 Igadera Shimo-Kaiinji**
**Nagaokakyo-City Kyoto 617(JP)**
Inventor: **Kikukawa, Takeshi Omron Tateisi Electronics Co.**
**Patent Dept. 20 Igadera Shimo-Kaiinji**
**Nagaokakyo-City Kyoto 617(JP)**

(74) Representative: **WILHELMS, KILIAN & PARTNER Patentanwälte**
**Eduard-Schmid-Strasse 2**
**W-8000 München 90(DE)**

## Description

This invention relates to a photoelectric switch, and more particularly to a rotary type photoelectric switch which is operated by the clockwise and counterclockwise rotation of a shaft.

### 2. Discussion of the Prior Art

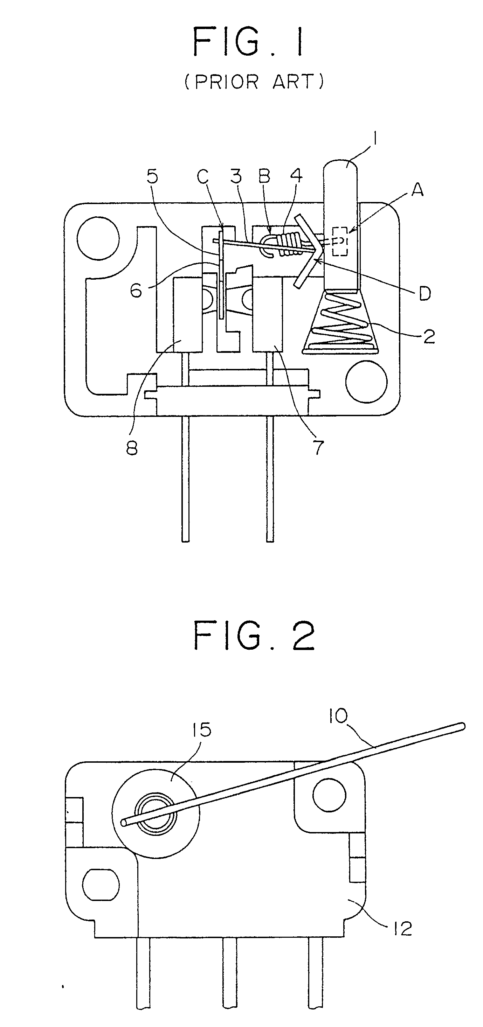

There is well known a photoelectric switch which contains a light emitting element, a light receiving element, and a light interrupting element slidably provided therebetween. Referring to a conventional photoelectric switch shown in Fig. 1, a push button 1 is pressed against a return spring 2, so that a movable piece 3 pulled by a coil spring 4 acts downwardly in a snap movement. A light interrupting element 5 coupled with movable piece 3 vertically goes down such that a window 6 of interrupting element 5 moves to a point in which light emitted from a LED 7 is received by a photodiode 8, thus making a switch circuit. The switch circuit is broken by releasing push button 1.

However, as denoted by A to D in Fig. 1, many junctions are required to perform such a snap movement, which causes wear or abrasion of contacting parts of such conjunctions, leading to a short life of the conventional photoelectric switch.

A rotary type photoelectric switch according to the preamble of claim 1 is known from DE-A-2 224 169. No return spring means is provided for the light-interrupting plate.

### Summary of the Invention

It is an object of this invention to provide a photoelectric switch which incorporates a rotary mechanism thereinto so that the number of conjunctions can possibly be reduced and the life of the switch can be extended.

Another object of the invention is the provision of stoppers for a rotary shaft which are disposed apart from the center of a rotary shaft so as to easily and accurately regulate the stroke range of the rotary shaft.

Further object of the invention is the provision of a coil spring each spring base of which is so arranged that the spring will expand and contract meanderingly therebetween, thus preventing a malfunction of a switch caused by the rebouncing action of a light-interrupting plate.

The invention is as claimed in claim 1.

Other objects and numerous advantages of the rotary type photoelectric switch according to this invention will become apparent from the following description when considered in conjunction with the accompanying drawings.

### Brief Description of the Drawings

Fig. 1 is a side view showing a prior art of a photoelectric switch;

Fig. 2 is a side view showing the appearance of a rotary type photoelectric switch of this invention;

Fig. 3 is a sectional view of the rotary type photoelectric switch of Fig. 2 in which the switch is in the Free Position (FP);

Fig. 4 is a sectional view of the rotary type photoelectric switch of Fig. 2 in which the switch is in the Total Travel Position (TTP);

Fig. 5 is an exploded-perspective view of the rotary type photoelectric switch of Fig. 2;

Fig. 6 is an electric circuit diagram of Fig. 2 and,

Fig. 7 is a graph illustrating the magnitude of spring load in relation to the stroke of the light-interrupting plate ranging from the Free Position to the Total Travel Position.

### Detailed Description of the Invention

An embodiment of this invention will now be described with reference to Fig. 2, Fig. 3, Fig. 4, Fig. 5 and Fig. 6.

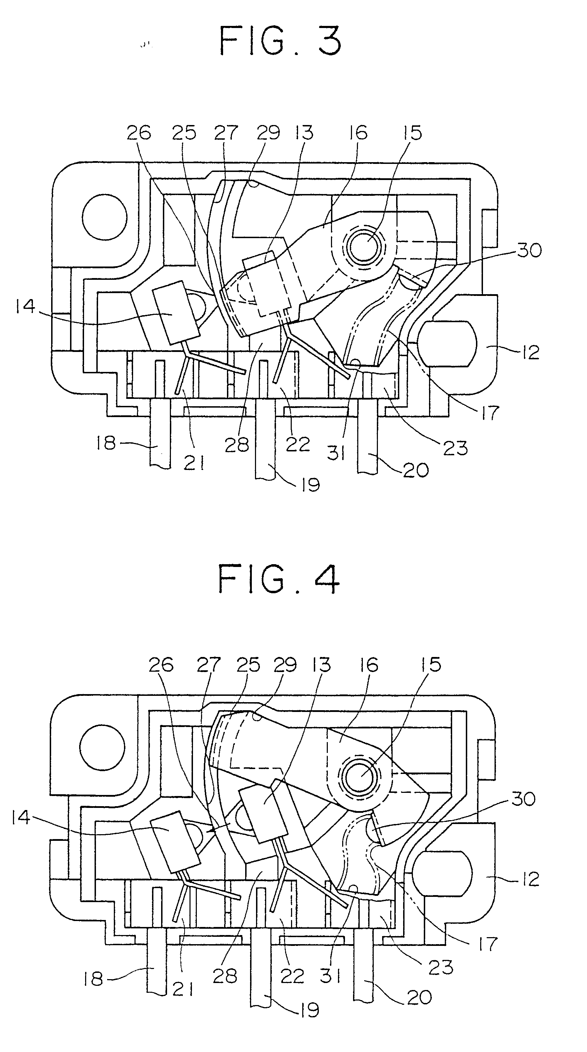

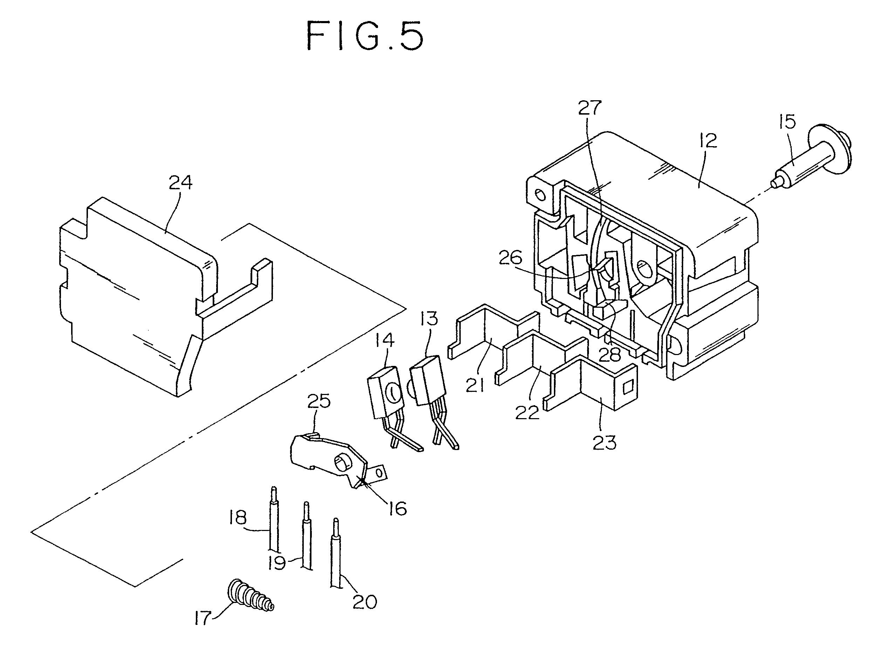

Fig. 2 is a side view of a rotary type photoelectric switch according to this invention, in which a lever 10 is linked to a rotary shaft 15 which can be rotated by the lever 10. Referring to Figs. 3, 4, and 5, there are shown internal components housed in a switch case 12 of the photoelectric switch. Among the components housed in switch case 12 are a light-emitting diode 13 (LED), a phototransistor 14, the rotary shaft 15, a light-interrupting plate 16 connected to rotary shaft 15, a coil spring 17 for returning light-interrupting plate 16 to its original position, leads 18,19 and 20, terminals 21, 22, and 23, and a switch cover 24 (Fig. 5) which covers these components.

One end of rotary shaft 15 extends out of switch case 12 to couple with lever 10. Another end of rotary shaft is fixed to light-interrupting plate 16 such that a light-interrupting portion 25 formed at the tip of plate 16 will swing together with rotary shaft 15 so as to enter into and exit from the lightpath 26 formed between LED 13 and phototransistor 14.

The light-interrupting portion 25 made by folding the tip of light-interrupting plate 16 is slidably engaged in a circular groove 27 a portion of which is cut to provide the lightpath 26. As light-interrupting plate 16 swings, the portion 25 slides along the circular groove 27.

Normally, the photoelectric switch is in an off-state as shown in Fig. 3, in which light-interrupting plate 16 is biased by coil spring 17 so as to be in the position where the light of LED 13 is prevented by light-interrupting portion 25 from reaching phototransistor 14. Coil spring 17 is pressurized between an upper spring base 30 formed at one end of light-interrupting plate 16 and a lower spring base 31 formed at switch case 12.

As light-interrupting plate 16 rotates against the spring force in response to the external force applied to lever 10, light-interrupting portion 25 rotates clockwise so that the light emitted from LED 13 is received by phototransistor 14 to bring the switch into an on-state as shown in Fig. 4.

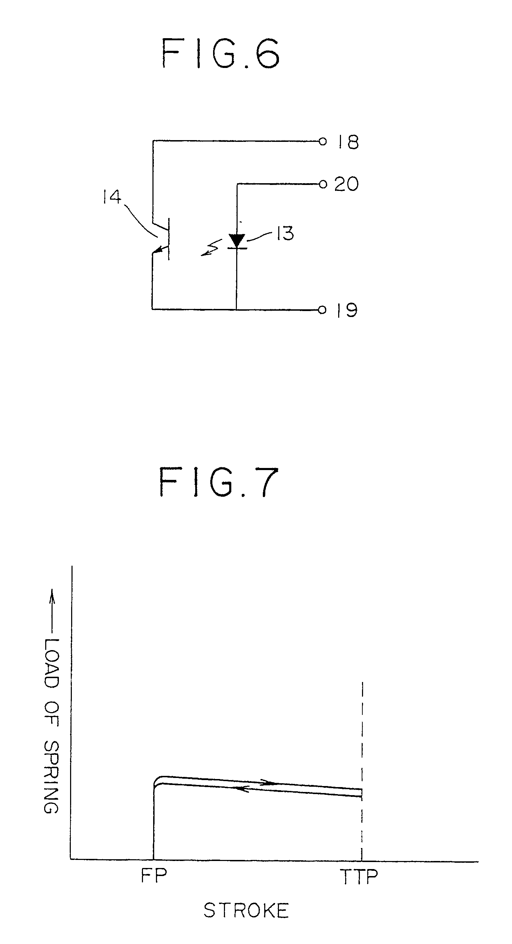

As shown in Fig. 6, LED 13 is electrically connected between an input lead 20 and an output lead 19, while phototransistor 14 is connected between an input lead 18 and the output lead 19. Actually, as the leads of LED 13 and phototransistor 14 are too thin to directly connect with leads 18, 19, and 20, terminals 21, 22, and 23 are provided therebetween which merely serve as relay terminals for relaying a signal from input leads 18 and 20 to the thin leads and from the thin leads to said output lead 19.

The light-interrupting plate 16 also acts as a lever for regulating the range of stroke thereof. The clockwise and counterclockwise rotation of light-interrupting plate 16 is interrupted by a stopper 28 at free position (FP) and a stopper 29 at total travel position (TP).

Stoppers 28 and 29 may be formed integrally with switch case 12. These stoppers are provided apart from rotary shaft 15 and respectively disposed to get into contact with the both sides of the end of light-interrupting plate 16 close to light-interrupting portion 25. It should be noted that the accuracy of stroke range between FP and TTP at the position of the tip of lever 10 can be improved by providing stoppers 28 and 29 as much apart from rotary shaft 15 as possible.

Referring to Figs. 3 and 4, the both ends of coil spring 17 is so supported by upper spring base 30 and lower spring base 31 that the spring 17 will meanderingly expand and contract as light-interrupting plate 16 rotates in both ways. More specifically, upper spring base 30 is provided to face in a deviated direction with respect to the direction to which lower spring base 31 faces.

Thus, as coil spring 17 expands to rotate light-interrupting plate to its Free Position, the expansion force does not concentrate into a single direction, thereby reducing the torque of light-interrupting plate 16 around rotary shaft 15. As a result, a strong clash between light-interrupting plate 16 and FP stopper 28 does not occur so that malfunction of the photoelectric switch will not be caused by the rebouncing action of plate 16. The expansion and contraction of coil spring 17 is guided by switch case 12 and switch cover 24.

Fig. 7 shows the relationship between the spring load of coil spring 17 and the stroke of light-interrupting plate 16 ranging from FP to TTP.

In general, the spring load increases as plate 16 comes close to TTP. In this invention, however, the spring load is kept almost constant over the range of the stroke because coil spring 17 expands meanderingly, whereby undesirable rebouncing of plate 16 can be eliminated.

## Claims

1. A rotary type photoelectric switch, comprising:
   a rotary shaft (15) rotated by an external force,
   a light-interrupting plate (16) coupled to said rotary shaft (15),
   a light-emitting element (13) for emitting light, and
   a light-receiving element (14) for receiving the light emitted from said light-emitting element (13), wherein said light-interrupting plate (16) swings to enter into and exit from the light path (26) formed between said light-emitting element (13) and said light-receiving element (14),
   characterized by
   a coil spring (17) for urging said light-interrupting plate (16) to its Free Position, each spring base (30, 31) of said coil spring (17) being so arranged that said coil spring (17) will expand and contract meanderingly therebetween.

2. A rotary type photoelectric switch according to claim 1, wherein one of said spring bases (30) is disposed to face in a deviated direction with respect to the direction in which the other spring base (31) faces.

3. A rotary type photoelectric switch according to claim 1 or 2, further comprising stoppers (28, 29) for regulating the rotation of said rotary shaft (15) within a predetermined range, said stoppers being disposed apart from the center of said rotary shaft (15) so as to easily and accurately adjust the stroke range thereof.

4. A rotary type photoelectric switch according to claim 3, wherein said stoppers (28, 29) regulate the rotation of said rotary shaft (15) by getting into contact with the tip of said light interrupting plate (16).

## Revendications

1. Un interrupteur photoélectrique de type tournant, comprenant :
   - un arbre rotatif (15) entraîné en rotation par une force externe,
   - une plaque (16) d'interruption de lumière reliée audit arbre rotatif (15),
   - un élément émetteur de lumière (13) pour émettre de la lumière, et
   - un élément récepteur de lumière (14) pour recevoir la lumière émise par ledit élément émetteur de lumière (13), ladite plaque (l6) d'interruption de lumière pivotant pour pénétrer dans et sortir du trajet de lumière (26) formé entre ledit élément émetteur de lumière (13) et ledit élément récepteur de lumière (14),
   - caractérisé par un ressort hélicoïdal (17) pour pousser ladite plaque d'interruption de lumière (16) jusque dans sa position de repos, chaque appui (30, 31) dudit ressort hélicoïdal (17) étant agencé de telle sorte que ledit ressort hélicoïdal (17) se dilate et se contracte en forme de méandres entre eux.

2. Un interrupteur photoélectrique de type tournant selon la revendication 1, dans lequel un desdits appuis de ressort (30) est disposé pour être orienté dans une direction déviée par rapport à la direction dans laquelle l'autre appui de ressort (31) est dirigé.

3. Un interrupteur photoélectrique de type tournant selon une des revendications 1 ou 2, comprenant en outre des butées (28, 29) pour régler la rotation dudit arbre rotatif (15) dans une gamme prédéterminée, lesdites butées étant disposées en espacement du centre dudit arbre rotatif (15) de façon à régler aisément et avec précision sa gamme de déplacement.

4. Un interrupteur photoélectrique de type tournant selon la revendication 3, dans lequel lesdites butées (28, 29) règlent la rotation dudit arbre rotatif (15) en établissant un contact avec l'extrémité de ladite plaque (16) d'interruption de lumière.

## Ansprüche

1. Photoelektrischer Drehschalter mit

einer durch eine äußere Kraft gedrehten Welle (15),
einer mit der Drehwelle (15) gekoppelten Lichtunterbrechungsplatte (16),
einem Leuchtelement (13) zum Aussenden von Licht, und
einem Lichtempfängerelement (14) für den Empfang des vom Leuchtelement (13) ausgesandten Lichts, wobei die Lichtunterbrechungsplatte (16) in und aus dem zwischen dem Leuchtelement (13) und dem Lichtempfängerelement gebildeten Lichtweg (26) schwenkt,
gekennzeichnet durch
eine Schraubenfeder (17) zum Belasten der Lichtunterbrechungsplatte (16) in ihre Frei-Stellung, wobei jede Federbasis (30, 31) der Schraubenfeder (17) so angeordnet ist, daß sich die Schraubenfeder (17) in Meanderform dazwischen ausdehnt und zusammenzieht.

2. Photoelektrischer Drehschalter nach Anspruch 1, bei welchem eine der Federbasen (30) in eine in Bezug auf die Richtung, in welche die andere Federbasis (31) weist, abweichende Richtung weist.

3. Photoelektrischer Drehschalter nach Anspruch 1 oder 2, welcher ferner Anschläge (28, 29) zur Einstellung der Drehung der Drehwelle (15) auf einen bestimmten Bereich umfaßt, wobei die Anschläge weg von der Mitte der Drehwelle (15) angeordnet sind, so daß sie in einfacher Weise und genau den Drehwinkelbereich derselben einstellen.

4. Photoelektrischer Drehschalter nach Anspruch 3, bei welchem die Anschläge (28, 29) die Drehung der Drehwelle (15) durch Inberührungkommen mit dem Ende der Lichtunterbrechungsplatte (16) einstellen.

# FIG. 1
(PRIOR ART)

# FIG. 2

# FIG. 3

# FIG. 4

FIG.5

# FIG.6

# FIG.7